# FASCICULE DE BREVET EUROPEEN

(11) **EP 2 998 216 B1**
(45) Date de publication et mention de la délivrance du brevet: **11.01.2017**
(21) Numéro de dépôt: 15182304.4
(22) Date de dépôt: 25.08.2015
(51) Int. Cl.: B64C 1/06, B61D 1/00, B60J 7/00, B64D 11/00

(54) **PLAFOND D'UN VEHICULE, VEHICULE ET PROCEDE DE MISE EN OEUVRE DUDIT PLAFOND**
DACHHIMMEL EINES FAHRZEUGS, FAHRZEUG UND VERFAHREN ZUM EINBAU DIESES DACHHIMMELS
A CEILING OF A VEHICLE, A VEHICLE, AND A METHOD OF USING SAID CEILING

(30) Priorité: 16.09.2014 FR 1402075
(43) Date de publication de la demande: 23.03.2016
(73) Titulaire: Airbus Helicopters, 13725 Marignane Cedex (FR)
(72) Inventeur: GIACALONE, Jean-Michel, F-13320 BOUC BEL AIR (FR); PEYRUSAUBES, Clément, 13090 AIX EN PROVENCE (FR)
(74) Mandataire: Pouillot, Laurent Pierre Paul

(56) Documents cités:
- US-A- 4 050 208
- US-A- 4 375 876
- US-A1- 2011 024 058
- US-A1- 2012 175 071

## Description

La présente invention concerne un plafond d'un véhicule, ainsi qu'un véhicule muni d'un tel plafond et le procédé mis en oeuvre. En particulier, un tel véhicule est un aéronef.

L'invention se situe donc dans le domaine technique des panneaux d'habillage de plafond d'un véhicule.

Un aéronef comporte usuellement des panneaux recouvrant les parois d'un habitacle. Dès lors, de tels panneaux sont communément dénommés « panneaux d'habillage ».

Un plafond peut notamment comporter une pluralité de panneaux d'habillage délimitant en élévation une cabine.

Ces panneaux d'habillage masquent des organes de l'aéronef, tels que des conduites hydrauliques, des câbles électriques, des dispositifs d'éclairage, des systèmes de climatisation...

Ces organes peuvent nécessiter l'intervention d'équipes de maintenance. Un individu peut devoir accéder à un organe pour vérifier périodiquement son fonctionnement ou pour remplacer une pièce défectueuse par exemple.

Pour accéder aux éléments situés derrière un panneau d'habillage d'un plafond, un opérateur doit alors démonter le panneau concerné. La dépose d'un panneau d'habillage implique parfois de déposer des panneaux d'habillage adjacents.

Chaque démontage d'un panneau d'habillage peut alors nécessiter des manipulations susceptibles de fragiliser ou de détériorer au moins un panneau d'habillage.

Dans ce contexte, le document EP 1.449.764 décrit un panneau muni d'une membrane extérieure et d'une membrane intérieure délimitant une cavité. Un matériau isolant est alors agencé dans cette cavité.

Chaque panneau est fixé en étant coincé entre un rail de fixation et un élément de fixation longiligne.

Certains aéronefs sont alors parfois munis de trappes d'accès permettant de réaliser des actions de maintenance.

L'ajout d'une trappe d'accès implique une augmentation de la masse de l'aéronef. De plus, la trappe d'accès peut induire des problèmes d'étanchéité acoustique. Enfin, une plaque d'accès s'avère peu esthétique.

Le document US 2012/175.071 décrit une toile tendue s'étendant longitudinalement entre deux extrémités pour matérialiser un plafond. Des tendeurs sont fixés aux extrémités pour tendre la toile. De plus, des bords longitudinaux de la toile s'étendent dans des guides. En outre, des raidisseurs arqués transversaux raidissent localement la toile.

Ce document US 2012/175.071 ne fournit donc pas un enseignement relatif à l'accès d'éléments situés derrière un plafond.

Le document GB 730.969 décrit un avion muni d'une soute.

Cette soute peut être partagée verticalement en deux espaces de stockage.

Ainsi, la soute comporte des rails fixes agencés à mi-hauteur et un élévateur muni de rails mobiles en élévation. Chaque rail mobile peut ainsi être déplacé verticalement du sol de la soute à un rail fixe.

Si la soute doit être partagée pour optimiser son espace, des plaques sont individuellement disposées dans l'élévateur pour être introduites entre les rails fixes. Chaque plaque est alors fixée aux rails fixes par des moyens de blocage pour former un plancher.

Ce document GB 730.969 est donc relatif à un plancher. Ce document GB 730.969 ne fournit donc pas un enseignement relatif à l'accès d'éléments situés derrière un plafond.

Ce document GB 730.969 est donc éloigné de l'invention, et est cité au titre d'arrière plan technologique uniquement.

Le document WO 2007/042.276 décrit un plafond de couloir mobile verticalement pour être remonté en l'absence de circulation dans le couloir.

Ce document WO 2007/042.276 ne fournit donc pas un enseignement relatif à l'accès d'éléments situés derrière un plafond.

Ce document WO 2007/042.276 est donc éloigné de l'invention, et est cité au titre d'arrière plan technologique uniquement.

Le document US 2011/0024058 présente un plafond muni de deux panneaux et divulgue les caractéristiques du préambule de la revendication 1.

Le document US 4050208 décrit un plafond muni d'un assemblage de panneaux.

Le document US 4375876 n'appartient au domaine de l'invention en étant relatif à une porte pliable.

La présente invention a alors pour objet un plafond pourvu de panneaux d'habillage visant à faciliter l'accès à des éléments situés derrière ces panneaux d'habillage.

Selon l'invention, un plafond d'un véhicule est muni d'une pluralité de panneaux rigides, chaque panneau rigide s'étendant longitudinalement d'un bord longitudinal dit « bord avant » vers un bord longitudinal dit « bord arrière » et latéralement d'un bord gauche vers un bord droit,

De plus, le plafond comporte un moyen de pression tendant à plaquer longitudinalement chaque panneau du plafond contre au moins un panneau adjacent.

En outre, les panneaux comportent au moins un panneau dit « panneau coulissant » porté par un dispositif de guidage, le bord gauche et le bord droit de chaque panneau coulissant étant en permanence situés dans un même plan dit « plan de translation », chaque panneau coulissant étant apte à coulisser longitudinalement le long dudit dispositif de guidage.

Les panneaux comportent aussi au moins un panneau dit « panneau escamotable » mobile en élévation pour être déplacé de manière réversible d'une position dite « position ouverte » vers une position dite « position fermée », le bord gauche et le bord droit du panneau escamotable étant situés dans le plan de translation dans la position fermée et sous le plan de translation dans la position ouverte, un bord longitudinal du panneau escamotable étant accolé à un bord longitudinal d'un panneau coulissant dans la position fermée, lesdits panneaux coulissants étant libres en translation longitudinale le long dudit dispositif de guidage lorsqu'au moins un panneau escamotable est dans la position ouverte et étant immobilisés en étant agencés longitudinalement l'un après l'autre lorsque chaque panneau escamotable est dans la position fermée.

Le plafond comporte alors un dispositif de déplacement pour déplacer de manière réversible le panneau escamotable de la position fermée à la position ouverte.

Par suite, le plafond n'est pas muni d'une toile tendue ou d'un unique panneau.

En effet, ce plafond est découpé longitudinalement en une pluralité de panneaux aboutés l'un après l'autre selon une direction longitudinale.

Ces panneaux comprennent des panneaux mobiles pouvant être translatés horizontalement dans le plan de translation le long d'un dispositif de guidage. Un tel panneau est qualifié de « mobile » en raison de sa faculté à être déplacé dans le plan de translation.

Au moins un des panneaux est, par ailleurs, un panneau escamotable. Ce panneau escamotable peut par exemple subir au moins une rotation pour être escamoté dans une position ouverte de manière à libérer de l'espace dans le plan de translation. Ce panneau est qualifié de « escamotable » en raison de sa faculté à être déplacé verticalement d'une position fermée à une position ouverte afin de libérer un espace dans le plan de translation. Par exemple, un seul panneau est un panneau escamotable.

Lorsque chaque panneau escamotable est dans la position fermée, les panneaux mobiles et les panneaux escamotables sont plaqués les uns contre les autres par le moyen de pression. Un tel moyen de pression peut comprendre au moins un organe élastique, par exemple un organe comprenant un bloc de matière élastique tel qu'un matériau en élastomère ou encore au moins un ressort par exemple.

Selon une réalisation munie d'un unique panneau escamotable, les panneaux mobiles sont par exemple disposés entre le moyen de pression et le panneau escamotable.

Selon une réalisation munie de deux panneaux escamotables, les panneaux mobiles sont par exemple disposés entre les panneaux escamotables, le moyen de pression comprenant un organe élastique disposé entre deux panneaux mobiles.

Lorsqu'un panneau escamotable est dans la position ouverte, ce panneau escamotable est agencé sous le plan de translation. L'absence du panneau escamotable dans le plan de translation libère de fait un espace dans ce plan de translation.

Cet espace libéré permet alors à un opérateur d'avoir éventuellement accès aux éléments situés derrière le panneau escamotable.

De plus, cet espace libéré permet de faire coulisser les autres panneaux dits « panneaux mobiles » dans le plan de translation. En déplaçant les panneaux mobiles, un opérateur peut alors accéder aux éléments situés derrière ces panneaux mobiles.

Par conséquent, l'invention permet d'accéder à des éléments masqués par le plafond sans enlever des panneaux, mais en utilisant la faculté de déplacement en élévation du panneau escamotable de manière à exploiter une faculté de déplacement en translation des panneaux mobiles. Les risques de dégradation d'un panneau durant cette opération sont alors réduits.

L'invention permet de plus d'éviter l'agencement de trappes d'accès.

Par ailleurs, le plafond n'est pas réalisé à l'aide d'un tissu tendu mais à l'aide de panneaux rigides. Par suite, la rigidité des panneaux associée à la compression exercée par le moyen de pression tend à optimiser l'étanchéité du plafond.

Ce plafond peut de plus comporter une ou plusieurs des caractéristiques qui suivent.

Ainsi, au moins un panneau peut comporter un bord longitudinal muni d'au moins un pion mâle tendant à pénétrer dans un orifice femelle d'un bord longitudinal d'un autre panneau suite à une pression exercée par le moyen de pression.

Les pions permettent de positionner correctement les panneaux les uns contre les autres lorsque le plafond est fermé.

Cette caractéristique tend à optimiser l'étanchéité acoustique inter-panneaux. L'interface entre les panneaux peut en effet être simplifiée.

De plus, par l'intermédiaire des pions et du moyen de pression, l'étanchéité entre chaque panneau est assurée quelles que soient les déformations de la structure, du moins en dehors de cas de crash.

Par ailleurs, le moyen de pression est éventuellement disposé contre un bord longitudinal d'un premier panneau coulissant, le premier panneau coulissant étant accolé à un unique autre panneau par l'autre bord longitudinal de ce premier panneau coulissant, ce moyen de pression ayant un moyen de fixation apte à être fixé à un cadre d'un véhicule.

Les panneaux mobiles sont en outre par exemple accolés deux à deux entre le moyen de pression et le panneau escamotable.

En outre, chaque panneau peut avoir la forme d'une arche.

Les panneaux sont alors arqués pour former des arches autoportantes. Chaque arche est supportée de part et d'autre de la cabine par le dispositif de guidage.

Un tel dispositif de guidage peut comporter deux rails de guidage longitudinaux agencés dans le plan de translation, chaque rail de guidage ayant au moins un dispositif d'attache à au moins deux cadres d'un véhicule.

Chaque rail peut comporter une pluralité de tronçons aboutés deux à deux.

Dès lors, les efforts exercés sur le plafond sont repris par les rails. Chaque rail peut alors présenter un profilé en forme de U ayant une concavité orientée vers les panneaux.

Cette architecture facilite le dimensionnement du plafond.

De plus, la mise en oeuvre de panneaux en forme d'arche réduit les ponts vibratoires entre la structure portant le plafond et les panneaux en limitant les points de fixation nécessaires pour soutenir les panneaux.

En outre, chaque panneau coulissant peut être solidaire d'un support portant au moins un connecteur électrique emmanché dans un autre connecteur électrique et / ou comportant un conduit creux dans l'alignement d'un autre conduit creux.

Le glissement de chaque panneau coulissant dans un même plan de translation permet d'utiliser des connections automatiques, aussi bien dans le cadre de circuits électriques qu'aérauliques.

Par exemple, un support comprend un caisson rapporté sous chaque panneau coulissant qui intègre de multiples systèmes, tels que des liseuses, des haut-parleurs, des bouches de ventilation.

Les connecteurs électriques permettent la connexion électrique automatique entre deux panneaux adjacents. A cet effet, chaque panneau coulissant possède au moins un connecteur mâle en ligne avec un connecteur femelle pour favoriser un emboitement des panneaux mobiles deux à deux.

Dès lors, cette architecture ne nécessite pas la mise en oeuvre d'une étape de branchement électrique entre les panneaux mobiles.

De même, ce système permet la connexion automatique des conduits de climatisation entre les panneaux mobiles.

Selon une première réalisation, pour au moins un panneau escamotable, le dispositif de déplacement comporte au moins une articulation fixée à un bord longitudinal de ce panneau escamotable pour permettre la rotation du panneau escamotable de la position ouverte vers la position fermée, et un dispositif d'immobilisation pour immobiliser le panneau escamotable dans la position fermée.

Par exemple, chaque articulation comporte un axe de rotation autour duquel le panneau escamotable peut tourner, cet axe de rotation étant sensiblement parallèle au plan de translation et étant situé sous ce plan de translation.

Le panneau escamotable est monté sur au moins un pivot pour pouvoir basculer et libérer de l'espace dans le plan transversal.

Par exemple, un bord longitudinal est muni de deux pivots pour positionner le panneau escamotable sensiblement dans un plan vertical orthogonal au plan de translation dans la position ouverte.

Le panneau escamotable est par exemple accolé à un panneau coulissant par son bord arrière et à un cadre du véhicule selon son bord avant.

Dès lors, selon une variante, les articulations sont interposées entre ledit cadre et le bord avant. Le panneau escamotable bascule ainsi verticalement contre la cloison dans la position ouverte.

Cette rotation dégage de l'espace pour effectuer une action de maintenance au-dessus du panneau escamotable, ou pour déplacer au moins un panneau coulissant.

Selon une autre variante, les articulations sont interposées entre le bord arrière et le panneau coulissant le plus proche. Le panneau escamotable peut alors coulisser avec ce panneau coulissant dans la position ouverte.

Selon une deuxième réalisation, pour au moins un panneau escamotable, le dispositif de déplacement comporte un système de décalage vertical du panneau escamotable, le panneau escamotable étant dans la position ouverte parallèle à une représentation du panneau escamotable agencé dans la position fermée.

Par suite, le système de décalage vertical permet de translater verticalement le panneau escamotable selon une direction verticale sensiblement perpendiculaire au plan de translation. Cette translation verticale est obtenue par le biais de deux rotations successives.

Le panneau escamotable comportant un bord longitudinal dit « bord accolé » à accoler à un panneau coulissant dans la position fermée et un bord longitudinal dit « bord non accolé » qui n'est jamais accolé à un panneau coulissant, le dispositif de déplacement peut comporter au moins une glissière dite « glissière immobile » s'étendant au moins sous le panneau escamotable dans la position fermée, un organe de pivotement solidaire dudit bord non accolé glissant le long de la glissière.

Par exemple, le dispositif de déplacement comporte deux glissières immobiles le long desquelles glissent deux organes de pivotement.

Les glissières immobiles du panneau escamotable sont par exemple placées à l'opposé et en regard du moyen de pression par rapport à la cabine. Ces glissières immobiles sont des glissières verticales fixées à une paroi de la cabine.

Dans la position fermée, l'organe de pivotement est placé dans une section supérieure des glissières immobiles. Par contre, l'organe de pivotement est placé dans une section inférieure des glissières immobiles lorsque le panneau escamotable est dans la position ouverte.

Un tel organe de pivotement peut comporter un arbre de pivotement solidaire d'un patin glissant le long d'une glissière immobile en forme de U ou de T.

Chaque organe de pivotement est en outre favorablement agencé sous le panneau escamotable en étant solidaire d'un déport en élévation dudit bord non accolé du panneau escamotable.

En outre, le dispositif de déplacement peut comporter un organe d'immobilisation dudit organe de pivotement par rapport à la glissière immobile correspondante dans la position fermée.

L'organe d'immobilisation tend à maintenir le panneau escamotable dans la position fermée sans action volontaire d'un individu.

Un tel organe d'immobilisation peut comporter une broche ou encore un système à billes par exemple.

Par ailleurs, chaque glissière immobile s'étendant d'une section supérieure vers une section inférieure, la section inférieure peut comporter une butée dite « butée basse » pour limiter la translation vers le bas de chaque organe de pivotement.

En outre, chaque organe de pivotement est éventuellement fixé de manière amovible au panneau escamotable. Cette caractéristique permet à un opérateur de démonter le panneau escamotable si nécessaire.

Par ailleurs, au moins un panneau escamotable comportant un bord longitudinal dit « bord accolé » à accoler à un panneau coulissant dans la position fermée et un bord longitudinal dit « bord non accolé » qui n'est pas accolé à un panneau coulissant, ledit dispositif de déplacement comporte au moins une glissière dite « glissière mobile » solidaire dudit bord accolé et une bielle, ladite bielle comprenant une extrémité inférieure munie d'un moyen de pivotement glissant le long de la glissière mobile et une extrémité supérieure munie d'un assemblage articulé apte à être fixé à un cadre d'un véhicule.

Le dispositif de déplacement peut aussi comporter un système d'immobilisation pour immobiliser chaque glissière mobile par rapport au moyen de pivotement dans la position fermée.

En outre, chaque moyen de pivotement peut être fixé de manière amovible à la bielle correspondante.

Par ailleurs, chaque glissière mobile s'étendant d'un tronçon supérieur vers un tronçon inférieur, le tronçon supérieur peut comporter une butée dite « butée haute ».

Pour ouvrir le plafond, un opérateur libère les organes de pivotement en manoeuvrant les organes d'immobilisation.

Une traction sur le panneau escamotable engendre une translation du panneau en déplaçant chaque organe de pivotement le long d'une glissière immobile. Ce pivotement est autorisé par les bielles.

Lorsque les butées basses sont atteintes, le panneau pivote selon un autre sens des organes de pivotement. Les glissières mobiles se déplacent alors par rapport aux bielles, ce déplacement étant finalement interrompu par les butées hautes.

Le panneau escamotable est alors agencé sous le plan de translation en étant sensiblement parallèle à la position initiale.

La procédure décrite ci-dessus est en outre réversible pour permettre la fermeture du plafond en plaçant le panneau escamotable dans la position fermée.

L'agencement du panneau escamotable dans la position fermée permet d'appliquer un effort suffisant pour comprimer le moyen de pression, de façon à emboîter de la manière requise tous les pions de centrage ainsi que les différentes connexions électriques et aérauliques.

Ainsi, l'invention ne nécessite pas d'enlever des sièges pour ouvrir un plafond. Cet aspect prend tout son sens sur un giravion pouvant être muni d'un plafond bas.

Outre un plafond, l'invention vise un véhicule comprenant une cabine,

Cette cabine est alors munie d'un plafond du type décrit précédemment.

L'invention concerne en outre un procédé pour accéder à des éléments situés derrière un tel plafond, au cours duquel :
- on déplace en élévation au moins un panneau escamotable de la position fermée à la position ouverte,
- on déplace au moins un panneau coulissant longitudinalement pour accéder auxdits éléments,
- on replace lesdits panneaux coulissants,
- on déplace en élévation chaque panneau escamotable de la position ouverte à la position fermée pour fermer le plafond ledit moyen de pression étant comprimé.

L'invention et ses avantages apparaîtront avec plus de détails dans le cadre de la description qui suit avec des exemples donnés à titre illustratif en référence aux figures annexées qui représentent :
- la figure 1, une vue de face d'un plafond selon l'invention,
- la figure 2, une coupe présentant la fixation d'un panneau à un rail de guidage,
- les figures 3 et 4, des schémas présentant la répartition des efforts sur un panneau,
- les figures 5 et 6, des schémas présentant un pion de centrage,
- les figures 7 et 8, des schémas relatifs à des supports de panneaux,
- la figure 9, un schéma présentant des moyens d'interface entre le plafond et des parois d'habillage,
- les figures 10 à 12, des schémas explicitant le fonctionnement du plafond,
- la figure 13, un schéma présentant une première réalisation,
- les figures 14 à 19, des schémas présentant une deuxième réalisation,
- les figures 20 à 21, des réalisations d'organes d'immobilisation, et
- la figure 22 une vue d'un aéronef muni de deux panneaux escamotables.

Les éléments présents dans plusieurs figures distinctes sont affectés d'une seule et même référence.

On note que trois directions X, Y et Z orthogonales les unes par rapport aux autres sont représentées sur certaines figures.

La première direction X est dite longitudinale. Le terme « longitudinal » est relatif à toute direction parallèle à la première direction X.

La deuxième direction Y est dite transversale. Le terme « transversal » est relatif à toute direction parallèle à la deuxième direction Y.

Enfin, la troisième direction Z est dite en élévation. L'expression « en élévation » est relative à toute direction parallèle à la troisième direction Z.

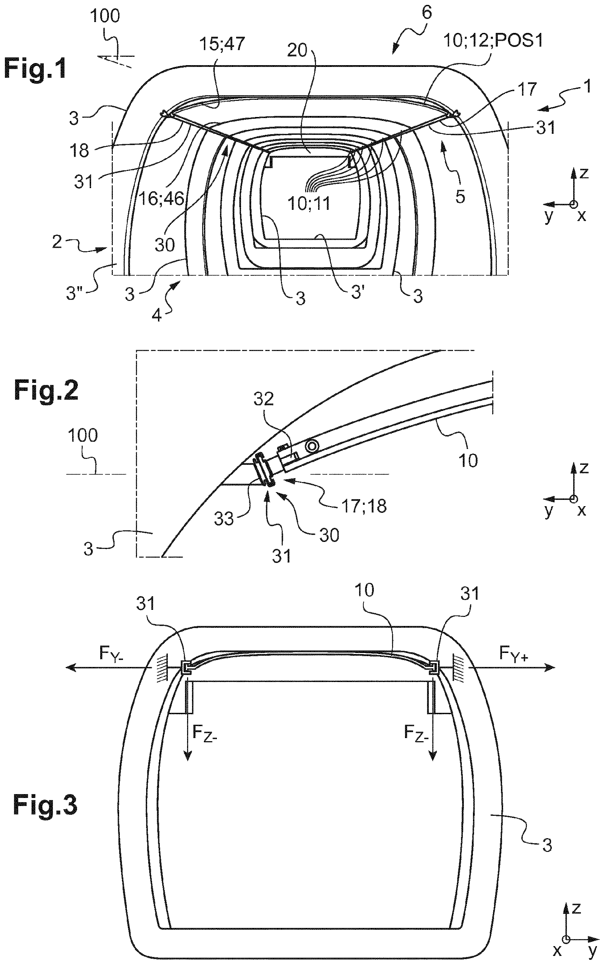

La figure 1 présente un véhicule 1 comprenant une cabine 4. Ce véhicule peut être par exemple un aéronef, tel qu'un giravion notamment.

La cabine 4 est délimitée par une pluralité de cadres 3. Chaque cadre 3 s'étend dans un plan transversal, à savoir un plan s'étendant parallèlement à la direction en élévation Z et à la direction transversale Y.

La cabine 4 peut aussi être délimitée par un plafond 5 masquant des éléments 6 du véhicule. Le plafond 5 est alors suspendu aux cadres 3.

Le plafond 5 comprend une pluralité de panneaux 10 rigides accolés l'un derrière l'autre selon une direction longitudinale. Chaque panneau peut avoir sensiblement la forme d'un quadrilatère arqué. Chaque panneau peut ainsi avoir la forme d'une arche.

En outre, chaque panneau s'étend longitudinalement d'un bord longitudinal dit « bord avant 15 » vers un bord longitudinal dit « bord arrière 16 » selon une direction allant de l'avant vers l'arrière du véhicule. De plus, chaque panneau s'étend latéralement d'un bord latéral dit « bord gauche 17 » vers un bord latéral dit « bord droit 18 ».

Ainsi, selon une direction allant de l'avant vers l'arrière du véhicule, le bord avant d'un panneau est accolé contre le bord d'un autre panneau adjacent, à l'exception du panneau situé le plus en avant de la cabine.

Le plafond comporte deux types de panneaux 10.

En effet, ce plafond est pourvu d'au moins un panneau dit « panneau coulissant 11 ». Selon l'exemple de la figure 1, le plafond est muni de six panneaux coulissants.

Chaque panneau coulissant est porté par un dispositif de guidage 30. Ce dispositif de guidage peut comprendre deux rails de guidage 31 définissant un plan de translation 100. Chaque rail de guidage possède alors au moins un dispositif d'attache 33 pour être porté par au moins un cadre, et favorablement deux cadres 3.

Dès lors, le bord gauche 17 et le bord droit 18 de chaque panneau coulissant 11 sont toujours en prise avec un rail de guidage et donc en permanence situés dans le plan de translation 100.

En référence à la figure 2, chaque bord latéral 17, 18 peut comprendre un système 32 de découplage mécanique entre le panneau coulissant 11 et le dispositif de guidage 30. Ainsi, ce système 32 de découplage mécanique coulisse le long d'un rail de guidage 31. Par exemple, chaque rail de guidage a une forme de C ou de T, le système 32 de découplage mécanique ayant une forme complémentaire pour coulisser le long de ce rail de guidage.

Par conséquent, chaque panneau coulissant 11 peut coulisser longitudinalement le long du dispositif de guidage 30.

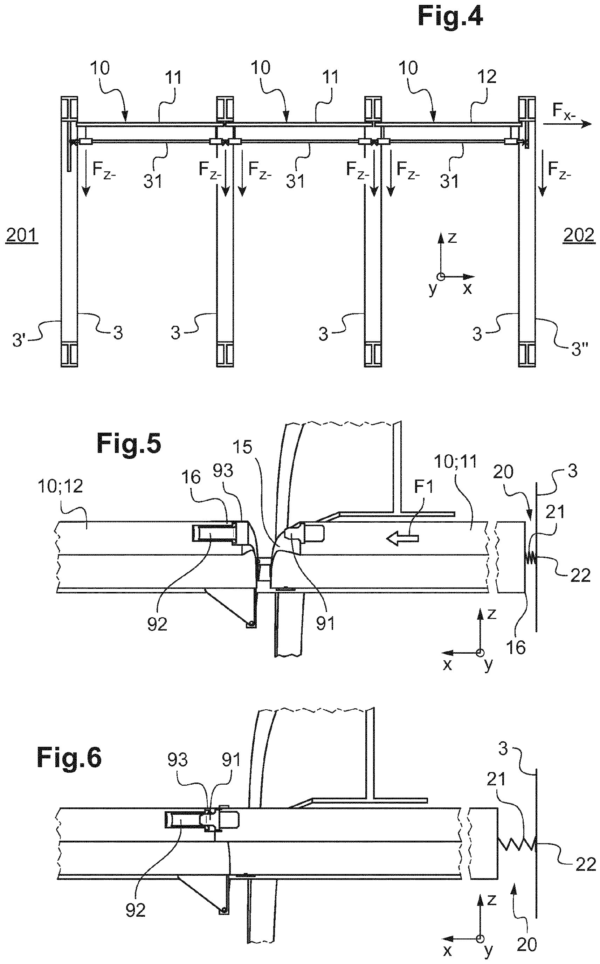

En référence aux figures 3 et 4, chaque panneau représente une arche autoportante portée par deux rails de guidage.

Les efforts en élévation Fz- exercés sur chaque panneau sont alors repris par les rails de guidage transversalement de part et d'autre du panneau, puis transmis aux cadres 3.

En référence à la figure 3, les efforts transversaux Fy- et Fy+ exercés sur chaque panneau sont alors repris par les rails de guidage transversalement de part et d'autre du panneau, puis transmis aux cadres 3. Chaque effort transversal est dirigé selon un sens allant du panneau vers un rail de guidage.

En référence à la figure 4, chaque panneau s'appuie sur le panneau situé devant lui ou derrière lui selon une direction allant de l'arrière 201 vers l'avant 202 de la cabine. Les efforts longitudinaux sont ainsi transmis au premier cadre 3' et au dernier cadre 3".

Par ailleurs et en référence à la figure 1, le plafond 5 peut comporte au moins un panneau dit « panneau escamotable 12 ». La figure 1 présente une variante munie d'un unique panneau escamotable 12.

Ce panneau escamotable 12 est mobile en élévation pour être déplacé de manière réversible d'une position dite « position ouverte POS2 » vers une position dite « position fermée POS1 » visible sur la figure 1.

Dans cette position fermée POS1, le bord gauche 17 et le bord droit 18 du panneau escamotable 12 sont situés dans le plan de translation 100, et donc dans la continuité des bords latéraux des panneaux coulissants.

Par contre, on verra par la suite que le bord gauche 17 et le bord droit 18 du panneau escamotable 12 sont situés sous le plan de translation 100 dans la position ouverte POS2.

Les panneaux mobiles sont situés les uns derrière les autres longitudinalement. Par suite, le panneau escamotable est situé à la suite des panneaux coulissants, ou précède les panneaux coulissants. Dès lors, le panneau escamotable comporte un bord longitudinal dit « bord accolé 46 » qui est à accoler à un panneau coulissant dans la position fermée POS1. De plus, le panneau escamotable possède un bord longitudinal dit « bord non accolé 47 » qui n'est jamais accolé à un panneau coulissant 11, mais qui est disposé contre un cadre 3" de la cabine. En l'occurrence, le bord arrière du panneau escamotable présenté représente son bord accolé, et le bord avant du panneau escamotable représente son bord non accolé agencé contre le dernier cadre 3" de la cabine.

Par ailleurs, le plafond comporte un moyen de pression 20 tendant à plaquer longitudinalement un panneau contre au moins un panneau adjacent en particulier dans la position fermée.

Par exemple, le moyen de pression 20 est un moyen élastique accolé entre un cadre 3 et le premier panneau coulissant 11, à savoir le seul panneau coulissant accolé à un unique autre panneau selon la variante de la figure 1. Par suite, tous les panneaux coulissants 11 sont agencés entre le moyen de pression 20 et le panneau escamotable selon cette réalisation.

En référence à la figure 5, le moyen de pression 20 est ainsi muni d'un moyen de fixation 22 usuel pour être attaché à un cadre. Par exemple, le moyen de pression comporte un ressort muni d'une extrémité fixée à un cadre 3.

De plus, le moyen de pression 20 est fixé au bord arrière 16 du premier panneau coulissant.

Le moyen de pression tend alors à déplacer le premier panneau coulissant selon la flèche F1 pour le plaquer contre un panneau adjacent.

Pour optimiser l'accolement de deux panneaux l'un contre l'autre, au moins un panneau 10 comporte un bord longitudinal muni sur sa tranche d'au moins un pion mâle 91.

En référence à la figure 6, ce pion mâle est dimensionné pour pénétrer dans un orifice femelle 92 de la tranche d'un bord longitudinal d'un autre panneau, notamment suite à une pression exercée par le moyen de pression 20.

Une mousse 93 peut être agencée autour de chaque orifice femelle 92 pour assurer une étanchéité acoustique.

Chaque panneau peut alors comprendre au moins un pion mâle et/ou au moins un orifice femelle pour constituer une surface unifiée dans la position fermée POS1.

Par ailleurs, au moins un panneau peut être solidaire d'au moins un support 80.

Ce support 80 comporte par exemple un caisson fixé au panneau, en s'étendant selon toute la longueur du panneau.

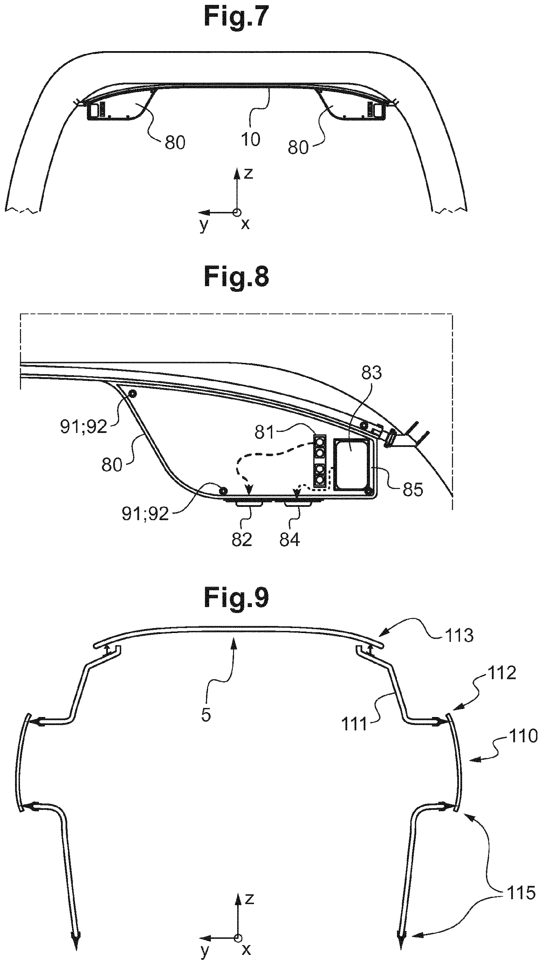

En référence à la figure 8, ce caisson peut porter des liseuses 82, des haut-parleurs non représentés voire des bouches de ventilation 84.

Ainsi, le support schématisé comporte au moins un connecteur électrique 81 emmanché dans la position fermée POS1 dans un connecteur électrique 81 d'un panneau adjacent ou d'un cadre adjacent par exemple. Ce connecteur électrique 81 est alors relié aux équipements électriques du caisson et /ou à un autre connecteur électrique 81 du caisson.

Le support schématisé comporte en outre un conduit creux 83 dans l'alignement d'un conduit creux 83 d'un autre panneau par exemple. Ce conduit creux peut notamment permettre la circulation d'air jusqu'aux bouches de ventilation 84.

Une mousse de protection 85 voire d'étanchéité peut entourer le conduit creux pour protéger les organes cheminant dans ce conduit creux le cas échéant.

La figure 9 présente une interface entre le plafond 5 et d'éventuelles parois latérales.

Une paroi d'habillage latérale peut ainsi comprendre un flanc 111. Ce flanc 111 peut être accolé à au moins un hublot 110 et à un plancher par des joints à lèvres 112, 115.

En outre, un joint racleur 113 peut être disposé entre chaque flanc et un panneau coulissant pour permettre la translation des panneaux coulissants.

En référence à la figure 1, le plafond comporte par ailleurs un dispositif de déplacement pour déplacer de manière réversible le panneau escamotable 12 de la position fermée POS1 à la position ouverte POS2.

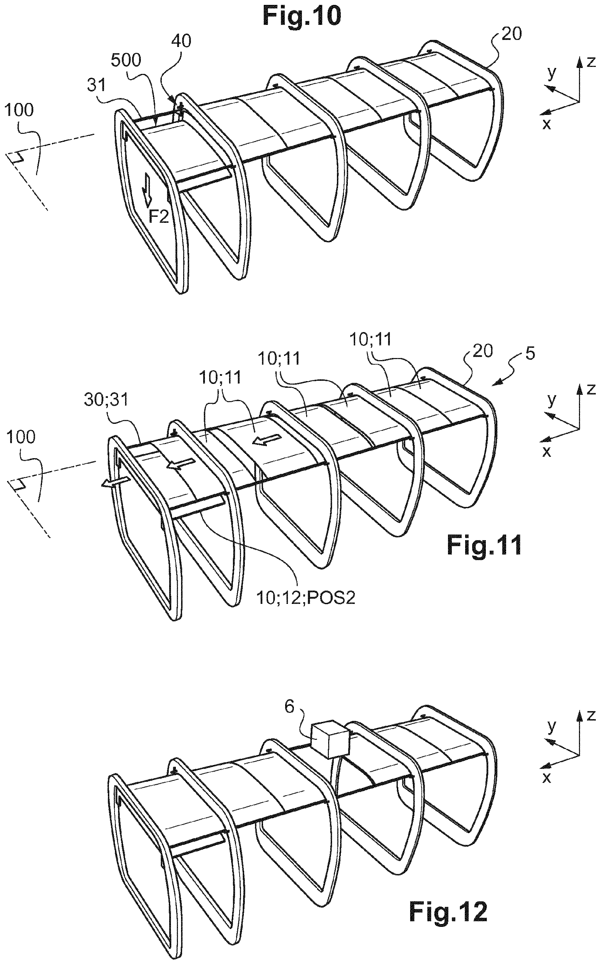

En référence à la figure 10, un opérateur manoeuvre alors le dispositif de déplacement 40 pour déplacer selon la flèche F2 le panneau escamotable de la position fermée POS1 à la position ouverte POS2.

Le panneau escamotable est alors par exemple parallèle à sa position initiale en étant situé sous la plan de translation. Le panneau escamotable reste néanmoins suspendu.

Ce déplacement libère alors un espace 500 dans le plan de translation. Cet espace libéré autorise alors la translation des panneaux coulissants.

En référence aux figures 11 et 12, un opérateur déplace au moins un panneau coulissant 11 longitudinalement pour accéder à des éléments 6 masqués initialement par le plafond.

A l'issue de cette opération, l'opérateur replace les panneaux coulissants 11 dans leurs positions initiales en comprimant le moyen de pression 20.

Enfin, l'opérateur déplace le panneau escamotable 12 de la position ouverte POS2 à la position fermée POS1 pour fermer le plafond 5.

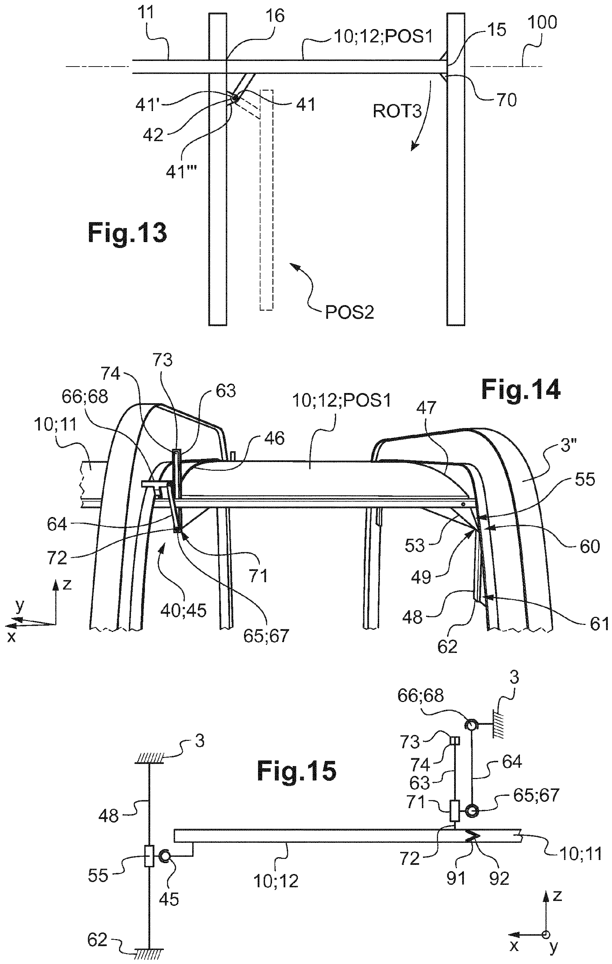

Selon la première réalisation de la figure 13, le dispositif de déplacement comporte au moins une articulation 41 reliée à un bord longitudinal du panneau escamotable. Cette articulation peut comprendre une tige pivot 41' traversant un déport du panneau et une ferrure 41"'. La tige pivot 41' s'étend alors selon un axe de rotation 42 autour duquel le panneau escamotable 12 peut tourner. Cet axe de rotation 42 est éventuellement sensiblement parallèle au plan de translation 100 et étant situé sous ce plan de translation 100.

Cette articulation 41 permet la rotation ROT3 du panneau escamotable de sa position fermée PODS1 représentée en trait plein, à sa position ouverte POS2 représentée avec des pointillés.

La ferrure peut être reliée à un cadre. Néanmoins, la ferrure peut être reliée au panneau coulissant 11 adjacent au panneau escamotable. Dès lors, une translation du panneau coulissant 11 entraîne une translation conjointe du panneau escamotable 12.

En outre, un dispositif d'immobilisation 70 usuel peut immobiliser de manière réversible le panneau escamotable 12 dans la position fermée POS1.

Par exemple, le dispositif d'immobilisation comporte un taquet amovible.

Les figures 14 à 19 illustrent un deuxième mode de réalisation.

Selon ce deuxième mode de réalisation, le dispositif de déplacement comporte un système de décalage vertical 45 pour déplacer le panneau escamotable de la position fermée à la position ouverte.

En référence à la figure 14, ce système de décalage vertical 45 comporte au moins une glissière immobile 48. Favorablement, au moins deux glissières immobiles sont agencées.

Chaque glissière immobile s'étend sensiblement verticalement sous le panneau escamotable dans sa position fermée POS1. Par exemple, chaque glissière immobile est fixée au dernier cadre 3" de la cabine.

Dès lors, le panneau escamotable est solidaire d'un organe de pivotement 49 par glissière immobile. La fixation d'un organe de pivotement 49 au panneau escamotable peut être réversible pour permettre le démontage du panneau escamotable.

Chaque organe de pivotement 49 est par exemple solidaire du bord non accolé 47 du panneau escamotable. De plus, chaque organe de pivotement 49 est situé sous le panneau escamotable en étant fixé sur un déport en élévation 53 solidaire du panneau escamotable 12.

Ainsi, chaque organe de pivotement glisse le long d'une glissière immobile et permet la rotation du panneau escamotable 12 par rapport à la glissière immobile.

Chaque glissière immobile 48 s'étend en outre d'une section supérieure 60 vers une section inférieure 61. La section inférieure 61 peut alors comporter une butée dite « butée basse 62 » pour limiter la liberté de mouvement vers le bas du panneau escamotable.

Pour immobiliser le panneau escamotable 12, le système de décalage vertical peut comporter un organe d'immobilisation 55 de l'organe de pivotement 49 par rapport à la glissière immobile 48 correspondante dans la position fermée POS1.

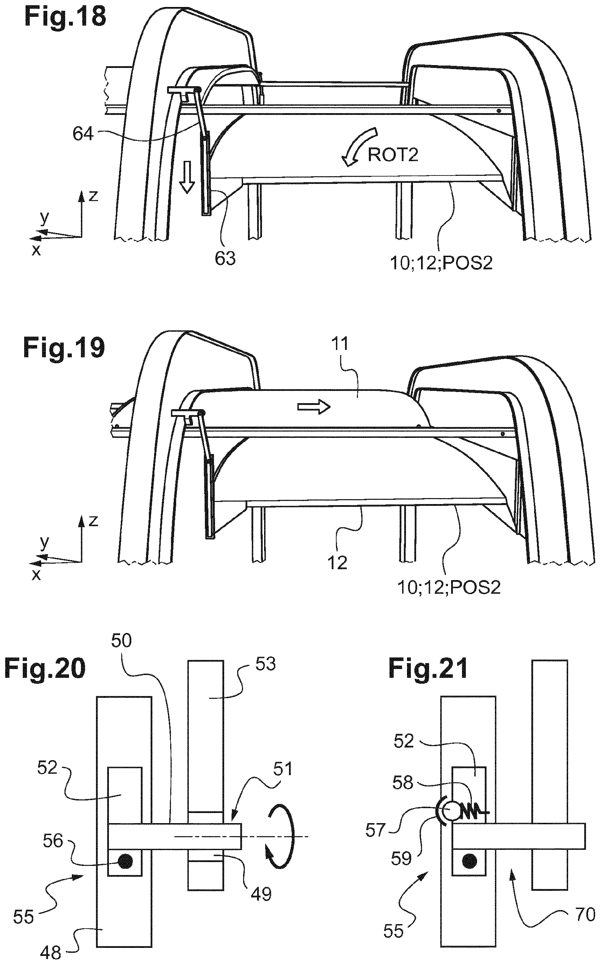

Selon la figure 20, l'organe de pivotement peut comprendre un axe de pivotement 50 articulé au déport en élévation du panneau escamotable. Par exemple, une articulation 51 lamifiée ou à roulement est interposée entre l'axe 50 et le déport en élévation.

L'axe de pivotement est en outre solidaire d'un patin 52 coulissant dans ou sur une glissière immobile.

Selon la variante de la figure 20, l'organe d'immobilisation 55 comporte un loquet amovible 56 traversant la glissière immobile et le patin 52.

Selon la variante de la figure 21, l'organe d'immobilisation 55 comporte une bille 57 agencée dans une cavité du patin. De plus un ressort 58 tend à pousser la bille 57 vers une cavité 59 de la glissière immobile. Sans intervention humaine, la bille reste maintenue dans la cavité de la glissière immobile pour immobiliser le panneau escamotable.

Ces variantes sont décrites à titre illustratif. En effet, tous les moyens d'immobilisation et de pivotement usuels sont envisageables.

En référence à la figure 14, ce système de décalage vertical 45 comporte au moins une glissière mobile 63. Favorablement, au moins deux glissières mobiles sont agencées.

Chaque glissière mobile 63 est solidarisée au panneau escamotable.

De plus, le système de décalage vertical 45 comprend une bielle 64 par glissière mobile 63. Chaque bielle 64 s'étend alors d'une extrémité inférieure 65 munie d'un moyen de pivotement 67 glissant le long de la glissière mobile 63 et d'une extrémité supérieure 66 munie d'un assemblage 68 articulé à un cadre 3.

Dès lors, chaque bielle 64 peut pivoter par rapport à un cadre. En outre, chaque glissière mobile peut coulisser et pivoter par rapport à une bielle.

Chaque moyen de pivotement peut être fixé de manière amovible à une bielle pour permettre l'extraction du panneau escamotable.

En outre, chaque glissière mobile 63 s'étendant d'un tronçon supérieur 73 vers un tronçon inférieur 72, ledit tronçon supérieur 73 peut comporter une butée dite « butée haute 74 » pour limiter le déplacement vers le bas du panneau escamotable.

Par exemple, chaque glissière mobile 63 s'étend sur une longueur égale à la longueur des glissières immobiles 48.

De plus, le système de décalage vertical peut comporter un système d'immobilisation 71 pour immobiliser chaque glissière mobile 63 par rapport au moyen de pivotement 67 dans la position fermée POS1. La technologie décrite sur les figures 20 et 21 est applicable à ce système d'immobilisation

En référence à la figure 15, l'organe d'immobilisation 55 et le système d'immobilisation 71 immobilisent le panneau escamotable 12 dans l'alignement des panneaux coulissants 11 dans la position fermée.

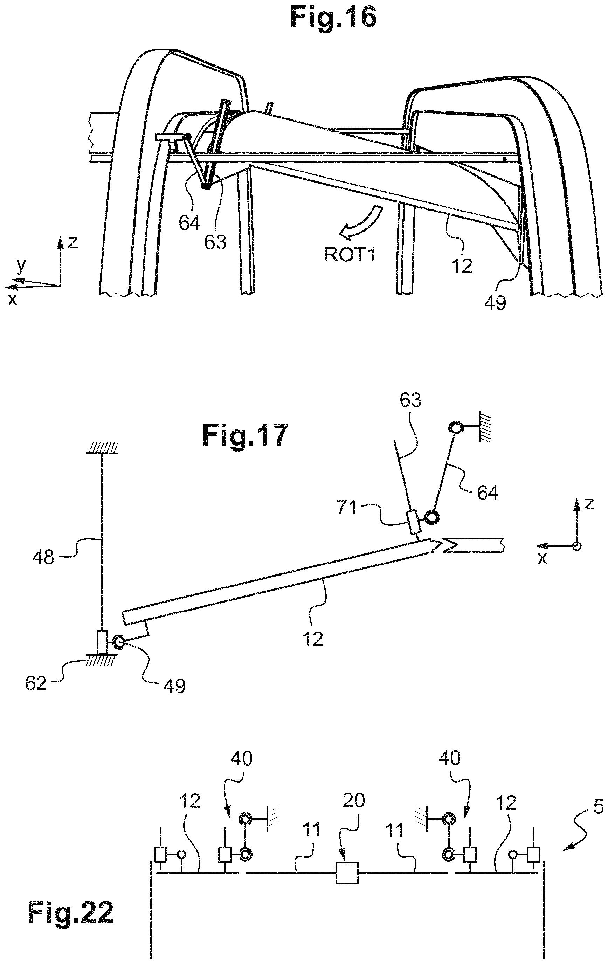

En référence aux figures 16 et 17, l'opérateur inhibe alors l'organe d'immobilisation 55.

Par suite, chaque organe de pivotement 49 coulisse dans la glissière immobile associée jusqu'à une butée basse 62.

De plus, chaque bielle 64 s'incline par rapport au cadre associé. Chaque glissière mobile pivote alors par rapport à la bielle 64 associé.

Dès lors, le panneau escamotable réalise une première rotation ROT1 et s'éloigne du panneau coulissant adjacent. Ce mouvement permet de déboiter le panneau escamotable 12 de ce panneau coulissant.

En référence à la figure 18, l'opérateur inhibe alors le système d'immobilisation 71.

Par suite, chaque bielle 64 retourne sensiblement dans sa position initiale visible sur la figure 16. De plus, chaque glissière mobile coulisse autour de la bielle 64 associée. Ce mouvement est alors stoppé par le blocage de la butée haute de la glissière mobile contre l'extrémité inférieure de la bielle 64

En outre, chaque organe de pivotement 49 autorise le pivotement du panneau escamotable selon une deuxième rotation ROT2.

Le panneau escamotable 12 est alors dans la position ouverte POS2.

En référence à la figure 19, l'escamotage du panneau escamotable 12 libère alors de l'espace dans le plan de translation. Par suite, les panneaux coulissants 11 peuvent être déplacés longitudinalement.

Dans ce contexte, le premier et le deuxième mode de réalisation permettent de déplacer le panneau escamotable par le biais d'au moins une rotation. Selon le premier mode de réalisation, le dispositif de déplacement positionne le panneau escamotable sensiblement à la verticale par le biais d'une rotation. Selon le deuxième mode de réalisation, le dispositif de déplacement positionne le panneau escamotable sensiblement à l'horizontale par le biais de deux rotations successives.

La figure 22 présente un plafond 5 muni d'une pluralité de panneaux escamotables 12.

Par exemple, les panneaux coulissant 11 sont en effet positionnés entre deux panneaux escamotables. Bien que la figure 22 présente des panneaux escamotables munis chacun d'un dispositif de déplacement 40 selon la réalisation de la figure 17, les autres réalisations décrites sont envisageables.

Par ailleurs, le moyen de pression 20 peut par exemple comprendre au moins un organe élastique agencé entre deux panneaux coulissant accolés l'un à l'autre.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Plafond (5) d'un véhicule (1), ce plafond (5) étant muni d'une pluralité de panneaux (10) rigides, chaque panneau (10) s'étendant longitudinalement d'un bord longitudinal dit « bord avant (15) » vers un bord longitudinal dit « bord arrière (16) » et latéralement d'un bord gauche (17) vers un bord droit (18),
- ledit plafond (5) comportant un moyen de pression (20) tendant à plaquer longitudinalement chaque panneau contre au moins un panneau adjacent,
- lesdits panneaux (10) comportant au moins un panneau dit « panneau coulissant (11)» porté par un dispositif de guidage (30), le bord gauche (17) et le bord droit (18) de chaque panneau coulissant (11) étant en permanence situés dans un même plan dit « plan de translation (100) », chaque panneau coulissant (11) étant apte à coulisser longitudinalement le long dudit dispositif de guidage (30),
**caractérisé en ce que**
- lesdits panneaux (10) comportent au moins un panneau dit « panneau escamotable (12) » mobile en élévation pour être déplacé de manière réversible d'une position dite « position ouverte (POS2) » vers une position dite « position fermée (POS1) », le bord gauche (17) et le bord droit (18) du panneau escamotable (12) étant situés dans le plan de translation (100) dans la position fermée (POS1) et sous le plan de translation (100) dans la position ouverte (POS2), un bord longitudinal du panneau escamotable (12) étant accolé à un bord longitudinal d'un panneau coulissant (11) dans la position fermée (POS1), lesdits panneaux coulissants (11) étant libres en translation longitudinale le long dudit dispositif de guidage (30) lorsqu'au moins un panneau escamotable (12) est dans la position ouverte (POS2) et étant immobilisés en étant agencés longitudinalement l'un après l'autre lorsque chaque panneau escamotable (12) est dans la position fermée (POS1),
- ledit plafond (5) comporte un dispositif de déplacement (40) pour déplacer de manière réversible chaque panneau escamotable (12) de la position fermée (POS1) à la position ouverte (POS2).

2. Plafond selon la revendication 1,
**caractérisé en ce qu'**au moins un desdits panneaux (10) comporte un bord longitudinal muni d'au moins un pion mâle (91) tendant à pénétrer dans un orifice femelle (92) d'un bord longitudinal d'un autre panneau suite à une pression exercée par le moyen de pression (20).

3. Plafond selon l'une quelconque des revendications 1 à 2,
**caractérisé en ce que** ledit moyen de pression (20) est disposé contre un bord longitudinal (16) d'un premier panneau coulissant (11), le premier panneau coulissant (11) étant accolé à un unique autre panneau par l'autre bord longitudinal (15) de ce premier panneau coulissant (11), ledit moyen de pression (20) ayant un moyen de fixation (22) apte à être fixé à un cadre (3) d'un véhicule (1).

4. Plafond selon l'une quelconque des revendications 1 à 3,
**caractérisé en ce que** chaque panneau (10) a la forme d'une arche.

5. Plafond selon l'une quelconque des revendications 1 à 4,
**caractérisé en ce que** ledit dispositif de guidage (30) comporte deux rails de guidage (31) longitudinaux agencés dans le plan de translation (100), chaque rail de guidage (31) ayant au moins un dispositif d'attache (33) à au moins deux cadres (3) d'un véhicule (1).

6. Plafond selon l'une quelconque des revendications 1 à 5,
**caractérisé en ce que** chaque panneau coulissant (11) est solidaire d'un support portant au moins un connecteur électrique (81) emmanché dans un autre connecteur électrique (81) et / ou comportant un conduit creux (83) dans l'alignement d'un autre conduit creux (83).

7. Plafond selon l'une quelconque des revendications 1 à 6,
**caractérisé en ce que**, pour au moins un panneau escamotable, ledit dispositif de déplacement (40) comporte au moins une articulation (41) fixée à un bord longitudinal de ce panneau escamotable (12) pour permettre la rotation (ROT3) dudit panneau escamotable (12) de la position ouverte (POS2) vers la position fermée (POS1), et un dispositif d'immobilisation (70) pour immobiliser le panneau escamotable (12) dans la position fermée (POS1).

8. Plafond selon la revendication 7,
**caractérisé en ce que** chaque articulation (41) comporte un axe de rotation (42) autour duquel ledit panneau escamotable (12) peut tourner, ledit axe de rotation (42) étant sensiblement parallèle au plan de translation (100) et étant situé sous ce plan de translation (100).

9. Plafond selon l'une quelconque des revendications 1 à 7,
**caractérisé en ce que**, pour au moins un panneau escamotable, ledit dispositif de déplacement (40) comporte un système de décalage vertical (45) du panneau escamotable (12), le panneau escamotable (12) étant dans la position ouverte (POS2) parallèle à une représentation du panneau escamotable (12) agencé dans la position fermée (POS1).

10. Plafond selon la revendication 9,
**caractérisé en ce que**, le panneau escamotable (12) comportant un bord longitudinal dit « bord accolé (46) » à accoler à un panneau coulissant dans la position fermée (POS1) et un bord longitudinal dit « bord non accolé (47) » qui n'est jamais accolé à un panneau coulissant (11), ledit dispositif de déplacement (40) comporte au moins une glissière dite « glissière immobile (48) » s'étendant au moins sous le panneau escamotable (12) dans la position fermée (POS1), un organe de pivotement (49) solidaire dudit bord non accolé (47) glissant le long de la glissière immobile (48).

11. Plafond selon la revendication 10,
**caractérisé en ce que** ledit dispositif de déplacement (40) comporte deux glissières immobiles (48) le long desquelles glissent deux organes de pivotement (49).

12. Plafond selon l'une quelconque des revendications 10 à 11,
**caractérisé en ce que** chaque organe de pivotement (49) est agencé sous le panneau escamotable (12) en étant solidaire d'un déport en élévation (53) dudit bord non accolé (47).

13. Plafond selon l'une quelconque des revendications 10 à 12,
**caractérisé en ce que** ledit dispositif de déplacement (40) comporte un organe d'immobilisation (55) dudit organe de pivotement (49) par rapport à la glissière immobile (48) correspondante dans la position fermée (POS1).

14. Plafond selon l'une quelconque des revendications 10 à 13,
**caractérisé en ce que** chaque glissière immobile (48) s'étendant d'une section supérieure (60) vers une section inférieure (61), ladite section inférieure (61) comporte une butée dite «butée basse (62) ».

15. Plafond selon l'une quelconque des revendications 10 à 14,
**caractérisé en ce que** chaque organe de pivotement (49) est fixé de manière amovible au panneau escamotable (12).

16. Plafond selon l'une quelconque des revendications 9 à 15,
**caractérisé en ce qu'**au moins un panneau escamotable (12) comportant un bord longitudinal dit « bord accolé (46) » à accoler à un panneau coulissant dans la position fermée (POS1) et un bord longitudinal dit « bord non accolé (47) » qui n'est pas accolé à un panneau coulissant (11), ledit dispositif de déplacement (40) comporte au moins une glissière dite « glissière mobile (63) » solidaire dudit bord accolé (46) et une bielle (64), ladite bielle (64) comprenant une extrémité inférieure (65) munie d'un moyen de pivotement (67) glissant le long de la glissière mobile (63) et une extrémité supérieure (66) munie d'un assemblage (68) articulé apte à être fixé à un cadre (3) d'un véhicule (1).

17. Plafond selon la revendication 16,
**caractérisé en ce que** ledit dispositif de déplacement (40) comporte un système d'immobilisation (71) pour immobiliser chaque glissière mobile (63) par rapport au moyen de pivotement (67) dans la position fermée (POS1).

18. Plafond selon l'une quelconque des revendications 16 à 17,
**caractérisé en ce que** chaque moyen de pivotement (67) est fixé de manière amovible à la bielle (64) correspondante.

19. Plafond selon l'une quelconque des revendications 16 à 18,
**caractérisé en ce que** chaque glissière mobile (63) s'étendant d'un tronçon supérieur (73) vers un tronçon inférieur (72), ledit tronçon supérieur (73) comporte une butée dite « butée haute (74) ».

20. Véhicule (1) comprenant une cabine (4),
**caractérisé en ce que** ladite cabine (4) est munie d'un plafond (5) selon l'une quelconque des revendications 1 à 19.

21. Procédé pour accéder à des éléments (6) situés derrière un plafond selon l'une quelconque des revendications 1 à 20, au cours duquel :
- on déplace en élévation au moins un panneau escamotable de la position fermée (POS1) à la position ouverte (POS2),
- on déplace au moins un panneau coulissant (11) longitudinalement pour accéder auxdits éléments (6),
- on replace lesdits panneaux coulissants (10),
- on déplace en élévation chaque panneau escamotable (12) de la position ouverte (POS2) à la position fermée (POS1) pour fermer le plafond (5),ledit moyen de pression (20) étant comprimé.

## Patentansprüche

1. Decke (5) eines Fahrzeugs (1), wobei diese Decke (5) mit einer Mehrzahl von steifen Platten (10) versehen ist, wobei jede Platte (10) sich in Längsrichtung von einem "vorderer Rand (15)" genannten Längsrand zu einem "hinterer Rand (16)" genannten Längsrand und seitlich von einem linken Rand (17) zu einem rechten Rand (18) erstreckt,
- wobei die Decke (5) ein Druckmittel (20) aufweist, das jede Platte gegen mindestens eine benachbarte Platte in Längsrichtung presst,
- wobei die Platten (10) mindestens eine "gleitende Platte (11)" genannte Platte aufweisen, die von einer Führungsvorrichtung (30) getragen wird, wobei der linke Rand (17) und der rechte Rand (18) jeder gleitenden Platte (11) ständig in einer "Translationsebene (100)" genannten Ebene liegen, wobei jede gleitende Platte (11) in Längsrichtung entlang der Führungsvorrichtung (30) gleiten kann,
**dadurch gekennzeichnet, dass**
- die Platten (10) mindestens eine "einklappbare Platte (12)" genannte Platte aufweisen, die in Höhenrichtung beweglich ist, um umkehrbar aus einer "offene Stellung (POS2)" genannten Stellung in eine "geschlossene Stellung (POS1)" genannte Stellung bewegt zu werden, wobei der linke Rand (17) und der rechte Rand (18) der einklappbaren Platte (12) in der Translationsebene (100) in der geschlossenen Stellung (POS1) liegen und in der offenen Stellung (POS2) unter der Translationsebene (100) liegen, wobei ein Längsrand der einklappbaren Platte (12) an einen Längsrand einer gleitenden Platte (11) in der geschlossenen Stellung (POS1) angefügt ist, wobei die gleitenden Platten (11) in der Längs-Translationsrichtung entlang der Führungsvorrichtung (30) frei beweglich sind, wenn mindestens eine einklappbare Platte (12) sich in der offenen Stellung (POS2) befindet, und, indem sie in Längsrichtung hintereinander angeordnet sind, blockiert sind, wenn sich jede einklappbare Platte (12) in der geschlossenen Stellung (POS1) befindet,
- die Decke (5) eine Verschiebevorrichtung (40) aufweist zum umkehrbaren Verschieben einer jeden einklappbaren Platte (12) aus der geschlossenen Stellung (POS1) in die offene Stellung (POS2).

2. Decke nach Anspruch 1,
**dadurch gekennzeichnet, dass** mindestens eine der Platten (10) einen Längsrand aufweist, der mit mindestens einem Stift (91) versehen ist, der in eine Öffnung (92) eines Längsrandes einer anderen Platte infolge eines Drucks eindringt, der von dem Druckmittel (20) ausgeübt wird.

3. Decke nach einem der Ansprüche 1 bis 2,
**dadurch gekennzeichnet, dass** das Druckmittel (20) gegen einen Längsrand (16) einer ersten gleitenden Platte (11) angeordnet ist, wobei die erste gleitende Platte (11) an eine einzige andere Platte durch den anderen Längsrand (15) dieser ersten gleitenden Platte (11) angefügt ist, wobei die Druckmittel (20) ein Befestigungsmittel (22) aufweisen, das an einem Rahmen (3) des Fahrzeugs (1) befestigt werden kann.

4. Decke nach einem der Ansprüche 1 bis 3,
**dadurch gekennzeichnet, dass** jede Platte (10) bogenförmig ist.

5. Decke nach einem der Ansprüche 1 bis 4,
**dadurch gekennzeichnet, dass** die Führungsvorrichtung (30) zwei Längsführungsschienen (31) aufweist, die in der Translationsebene (100) angeordnet sind, wobei jede Führungsschiene (31) mindestens eine Vorrichtung (33) zur Befestigung an mindestens zwei. Rahmen (3) eines Fahrzeugs (1) aufweist.

6. Decke nach einem der Ansprüche 1 bis 5,
**dadurch gekennzeichnet, dass** jede gleitende Platte (11) fest mit einem Träger verbunden ist, der mindestens einen elektrischen Verbinder (81) trägt, der in einen anderen elektrischen Verbinder (81) eingesteckt ist, und/oder einen Hohlleiter (83) aufweist, der mit einem anderen Hohlleiter (83) fluchtet.

7. Decke nach einem der Ansprüche 1 bis 6,
**dadurch gekennzeichnet, dass** für mindestens eine einklappbare Platte die Verschiebevorrichtung (40) mindestens ein Gelenk (41) aufweist, das an einem Längsrand dieser einklappbaren Platte (12) befestigt ist, um die Drehung (ROT3) der einklappbaren Platte (12) aus der offenen Stellung (POS2) in die geschlossene Stellung (POS1) zu erlauben, und eine Blockiervorrichtung (70) zur Blockierung der einklappbaren Platte (12) in der geschlossenen Stellung (POS1).

8. Decke nach Anspruch 7,
**dadurch gekennzeichnet, dass** jedes Gelenk (41) eine Drehachse (42) aufweist, um die sich die einklappbare Platte (12) drehen kann, wobei die Drehachse (42) im Wesentlichen parallel zu der Translationsebene (100) verläuft und unter der Translationsebene (100) gelegen ist.

9. Decke nach einem der Ansprüche 1 bis 7,
**dadurch gekennzeichnet, dass** für mindestens eine einklappbare Platte die Verschiebevorrichtung (40) ein System (45) zur vertikalen Versetzung der einklappbaren Platte (12) aufweist, wobei die einklappbare Platte (12) sich in der offenen Stellung (POS2) befindet parallel zu einem Auftreten der einklappbaren Platte (12) in der geschlossenen Stellung (POS1).

10. Decke nach Anspruch 9,
**dadurch gekennzeichnet, dass** die einklappbare Platte (12) einen "angefügter Rand (46)" genannten Längsrand aufweist, der in der geschlossenen Stellung (POS1) an eine gleitende Platte anzufügen ist, und einen "nicht angefügter Rand (47)" genannten Längsrand, der nie an eine gleitende Platte (11) angefügt wird, wobei die Verschiebevorrichtung (40) mindestens eine "unbewegliche Gleitschiene (48)" genannte Gleitschiene aufweist, die sich mindestens unterhalb der einklappbaren Platte (12) in der geschlossenen Stellung (POS1) erstreckt, wobei ein Schwenkelement (49), das mit dem nicht angefügten Rand (47) fest verbunden ist, entlang der unbeweglichen Gleitschiene (48) gleitet.

11. Decke nach Anspruch 10,
**dadurch gekennzeichnet, dass** die Verschiebevorrichtung (40) zwei unbewegliche Gleitschienen (48) aufweist, entlang derer zwei Schwenkelemente (49) gleiten.

12. Decke nach einem der Ansprüche 10 bis 11,
**dadurch gekennzeichnet, dass** jedes Schwenkelement (49) unter der einklappbaren Platte (12) angeordnet ist, wobei es mit einem Versatz in der Höhe (53) des nicht angefügten Rands (47) fest verbunden ist.

13. Decke nach einem der Ansprüche 10 bis 12,
**dadurch gekennzeichnet, dass** die Verschiebevorrichtung (40) ein Blockierelement (55) für das Schwenkelement (49) relativ zu zugehörigen unbeweglichen Gleitschienen (48) in der geschlossenen Stellung (POS 1) aufweist.

14. Decke nach einem der Ansprüche 1 bis 13,
**dadurch gekennzeichnet, dass** jede unbewegliche Gleitschiene (48) sich von einem oberen Abschnitt (60) zu einem unteren Abschnitt (61) erstreckt, wobei der untere Abschnitt (61) einen "unterer Anschlag (62)" genannten Anschlag aufweist.

15. Decke nach einem der Ansprüche 10 bis 14,
**dadurch gekennzeichnet, dass** jedes Schwenkelement (49) abnehmbar an der einklappbaren Platte (12) befestigt ist.

16. Decke nach einem der Ansprüche 9 bis 15,
**dadurch gekennzeichnet, dass** mindestens eine einklappbare Platte (12) einen "angefügter Rand (46)" genannten Längsrand aufweist, der in der geschlossenen Stellung (POS 1) an eine gleitende Platte anzufügen ist, und einen "nicht angefügter Rand (47)" genannten Längsrand, der nicht an eine gleitende Platte (11) angefügt ist, wobei die Verschiebevorrichtung (40) mindestens eine "bewegliche Gleitschiene (63)" genannte Gleitschiene aufweist, die mit dem angefügten Rand (46) fest verbunden ist, und eine Kurbelstange (64), wobei die Kurbelstange (64) ein unteres Ende (65) aufweist, das mit einem Schwenkmittel (67) versehen ist, das entlang der beweglichen Gleitschiene (63) gleitet, und ein oberes Ende (66), das mit einem angelenkten Verbindungsstück (68) versehen ist, das an einem Rahmen (3) eines Fahrzeugs (1) befestigt werden kann.

17. Decke nach Anspruch 16,
**dadurch gekennzeichnet, dass** die Verschiebevorrichtung (40) ein Blockiersystem (71) aufweist zum Blockieren einer jeden beweglichen Gleitschiene (63) relativ zu dem Schwenkmittel (67) in der geschlossenen Stellung (POS 1).

18. Decke nach einem der Ansprüche 16 bis 17,
**dadurch gekennzeichnet, dass** jedes Schwenkmittel (67) lösbar an der zugehörigen Kurbelstange (64) befestigt ist.

19. Decke nach einem der Ansprüche 16 bis 18,
**dadurch gekennzeichnet, dass** jede bewegliche Gleitschiene (63) sich von einem oberen Abschnitt (73) zu einem unteren Abschnitt (72) erstreckt, wobei der obere Abschnitt (73) einen "oberer Anschlag (74)" genannten Anschlag aufweist.

20. Fahrzeug (1) mit einer Kabine (4),
**dadurch gekennzeichnet, dass** die Kabine (4) mit einer Decke (5) nach einem der Ansprüche 1 bis 19 versehen ist.

21. Verfahren, um an Elemente (6) zu gelangen, die hinter einer Decke nach einem der Ansprüche 1 bis 20 gelegen sind, bei dem:
- mindestens eine einklappbare Platte in Höhenrichtung aus der geschlossenen Stellung (POS1) in die offene Stellung (POS2) bewegt wird,
- mindestens eine gleitende Platte (11) in Längsrichtung bewegt wird, um an die Elemente (6) zu gelangen,
- die gleitenden Platten (10) wieder zurückbewegt werden,
- jede einklappbare Platte (12) in Höhenrichtung aus der offenen Stellung (POS2) in die geschlossene Stellung (POS1) bewegt wird, um die Decke (5) zu schließen, wobei das Druckmittel (20) komprimiert ist.

## Claims

1. A ceiling (5) of a vehicle (1), this ceiling (5) being provided with a plurality of rigid panels (10), each panel (10) extending longitudinally from a longitudinal edge referred to as "front edge (15)" to a longitudinal edge referred to as "rear edge (16)" and laterally from a left-hand edge (17) to a right-hand edge (18),
- said ceiling (5) comprising a pressing means (20) which tends to flatten each panel longitudinally against at least one adjacent panel,
- said panels (10) comprising at least one panel referred to as "sliding panel (11)" borne by a guide device (30), the left-hand edge (17) and the right-hand edge (18) of each sliding panel (11) being permanently located in one and the same plane, referred to as "plane of translation (100)", each sliding panel (11) being capable of sliding longitudinally along said guide device (30),
**characterised in that**
- said panels (10) comprise at least one panel, referred to as "retractable panel (12)", which is mobile in elevation in order to be displaced reversibly from a position referred to as "open position (POS2)" to a position referred to as "closed position (POS1)", the left-hand edge (17) and the right-hand edge (18) of the retractable panel (12) being located in the plane of translation (100) in the closed position (POS1) and beneath the plane of translation (100) in the open position (POS2), a longitudinal edge of the retractable panel (12) adjoining a longitudinal edge of a sliding panel (11) in the closed position (POS1), said sliding panels (11) being free in longitudinal translation along said guide device (30) when at least one retractable panel (12) is in the open position (POS2), and being immobilised by being arranged longitudinally one after the other when each retractable panel (12) is in the closed position (POS1),
- said ceiling (5) comprises a displacement device (40) for reversibly displacing each retractable panel (12) from the closed position (POS1) to the open position (POS2).

2. A ceiling according to Claim 1,
**characterised in that** at least one of said panels (10) comprises a longitudinal edge provided with at least one male peg (91) which tends to penetrate into a female opening (92) in a longitudinal edge of another panel as a result of pressure exerted by the pressing means (20).

3. A ceiling according to any one of Claims 1 to 2,
**characterised in that** said pressing means (20) is arranged against a longitudinal edge (16) of a first sliding panel (11), the first sliding panel (11) adjoining a single other panel by the other longitudinal edge (15) of this first sliding panel (11), said pressing means (20) having a fastening means (22) capable of being fastened to a frame (3) of a vehicle (1).

4. A ceiling according to any one of Claims 1 to 3,
**characterised in that** each panel (10) is in the shape of an arch.

5. A ceiling according to any one of Claims 1 to 4,
**characterised in that** said guide device (30) comprises two longitudinal guide rails (31) arranged in the plane of translation (100), each guide rail (31) having at least one attachment device (33) for attaching to at least two frames (3) of a vehicle (1).

6. A ceiling according to any one of Claims 1 to 5,
**characterised in that** each sliding panel (11) is integral with a support bearing at least one electrical connector (81) fitted into another electrical connector (81) and/or comprising a hollow duct (83) in line with another hollow duct (83).

7. A ceiling according to any one of Claims 1 to 6,
**characterised in that**, for at least one retractable panel, said displacement device (40) comprises at least one articulation (41) fastened to a longitudinal edge of this retractable panel (12) in order to permit rotation (ROT3) of said retractable panel (12) from the open position (POS2) to the closed position (POS1), and an immobilisation device (70) for immobilising the retractable panel (12) in the closed position (POS1).

8. A ceiling according to Claim 7,
**characterised in that** each articulation (41) comprises an axis of rotation (42) about which said retractable panel (12) can turn, said axis of rotation (42) being substantially parallel to the plane of translation (100) and being located beneath this plane of translation (100).

9. A ceiling according to any one of Claims 1 to 7,
**characterised in that**, for at least one retractable panel, said displacement device (40) comprises a system for vertically shifting (45) the retractable panel (12), the retractable panel (12) in the open position (POS2) being parallel to a representation of the retractable panel (12) arranged in the closed position (POS1).

10. A ceiling according to Claim 9,
**characterised in that**, the retractable panel (12) comprising a longitudinal edge referred to as "adjoining edge (46)" to adjoin a sliding panel in the closed position (POS 1) and a longitudinal edge referred to as "non-adjoining edge (47)" which never adjoins a sliding panel (11), said displacement device (40) comprises at least one slideway referred to as "stationary slideway (48)" extending at least beneath the retractable panel (12) in the closed position (POS 1), a pivoting member (49) integral with said non-adjoining edge (47) sliding along the stationary slideway (48).

11. A ceiling according to Claim 10,
**characterised in that** said displacement device (40) comprises two stationary slideways (48) along which two pivoting members (49) slide.

12. A ceiling according to any one of Claims 10 to 11,
**characterised in that** each pivoting member (49) is arranged beneath the retractable panel (12), being integral with an offset in elevation (53) of said non-adjoining edge (47).

13. A ceiling according to any one of Claims 10 to 12,
**characterised in that** said displacement device (40) comprises an immobilisation member (55) for immobilising said pivoting member (49) relative to the corresponding stationary slideway (48) in the closed position (POS1).

14. A ceiling according to any one of Claims 10 to 13,
**characterised in that**, each stationary slideway (48) extending from an upper section (60) to a lower section (61), said lower section (61) comprises an abutment referred to as "low abutment (62)".

15. A ceiling according to any one of Claims 10 to 14,
**characterised in that** each pivoting member (49) is fastened removably to the retractable panel (12).

16. A ceiling according to any one of Claims 9 to 15,
**characterised in that** at least one retractable panel (12) comprising a longitudinal edge referred to as "adjoining edge (46)" to adjoin a sliding panel in the closed position (POS1) and a longitudinal edge referred to as "non-adjoining edge (47)" which does not adjoin a sliding panel (11), said displacement device (40) comprises at least one slideway referred to as "mobile slideway (63)" which is integral with said adjoining edge (46), and a rod (64), said rod (64) comprising a lower end (65) provided with a pivoting means (67) which slides along the mobile slideway (63) and an upper end (66) provided with an articulated assembly (68) capable of being fastened to a frame (3) of a vehicle (1),

17. A ceiling according to Claim 16,
**characterised in that** said displacement device (40) comprises an immobilisation system (71) for immobilising each mobile slideway (63) relative to the pivoting means (67) in the closed position (POS1).

18. A ceiling according to any one of Claims 16 to 17,
**characterised in that** each pivoting means (67) is fastened removably to the corresponding rod (64).

19. A ceiling according to any one of Claims 16 to 18,
**characterised in that**, each mobile slideway (63) extending from an upper section (73) to a lower section (72), said upper section (73) comprises an abutment referred to as "high abutment (74)".

20. A vehicle (1) comprising a cabin (4),
**characterised in that** said cabin (4) is provided with a ceiling (5) according to any one of Claims 1 to 19.

21. A method for accessing elements (6) located behind a ceiling according to any one of Claims 1 to 20, during which:
- at least one retractable panel is displaced in elevation from the closed position (POS1) to the open position (POS2),
- at least one sliding panel (11) is displaced longitudinally in order to access said elements (6),
- said sliding panels (10) are repositioned,
- each retractable panel (12) is displaced in elevation from the open position (POS2) to the closed position (POS1) in order to close the ceiling (5), said pressing means (20) being compressed.
